# EUROPÄISCHE PATENTSCHRIFT

(11) **EP 3 683 483 B1**
(45) Veröffentlichungstag und Bekanntmachung des Hinweises auf die Patenterteilung: **09.08.2023**
(21) Anmeldenummer: 19020027.9
(22) Anmeldetag: 16.01.2019
(51) Int. Cl.: F16L 37/098, B65D 77/06, F16L 37/096

(54) **ANSCHLUSSSTÜCK ZUM ANSCHLIESSEN EINES SCHLAUCHES AN EINEN GETRÄNKEBEUTEL**
CONNECTOR FOR CONNECTING A HOSE TO A BEVERAGE BAG
PIÈCE DE RACCORDEMENT PERMETTANT DE RACCORDER UN TUYAU À UN SACHET DE BOISSON

(43) Veröffentlichungstag der Anmeldung: 22.07.2020
(73) Patentinhaber: RIVERFLOW GmbH, 52070 Aachen (DE)
(72) Erfinder: ZWICK, Boris, 52070 Aachen (DE)
(74) Vertreter: von Bülow & Tamada

(56) Entgegenhaltungen:
- EP-A2- 0 585 908
- DE-A1- 19 839 842
- US-A- 5 694 991
- US-A- 5 823 397
- US-A1- 2004 045 632
- US-E- R E32 354

## Beschreibung

Die vorliegende Erfindung betrifft ein Anschlussstück zum Anschließen eines Schlauches an einen Getränke beutel.

Aus der US 9,573,736 B2 ist ein Anschlussstück gemäß dem Oberbegriff des geltenden Anspruchs 1 bekannt.

Die DE 19839842 A1 offenbart, dass bei einer Entnahmevorrichtung für einen Flüssigkeitsbehälter aus flexiblem Werkstoff in einem ihn umgebenden und von der Entnahmevorrichtung durchgriffenen i.w. formstabilen Außenbehälter ein Rohrstutzen der Entnahmevorrichtung mit der Wand des Flüssigkeitsbehälters im Bereich eines Wanddurchbruches mittels eines am rohrartigen Teil angeformten Flanschkragens flüssigkeits- und gasdicht verbunden ist. Dem Rohrstutzen ist ein gesonderter, in Verschlussstellung den Querschnitt des Rohrraumes schließender Verschlusskörper zugeordnet, der am freien Rohrmündungsende eines in den Rohrraum axial einführbaren Anschlussrohres lösbar festzulegen und mit diesem aus der Verschlussstellung in eine Öffnungsstellung überführbar ist, in welcher der am Rohrmündungsende angebrachte Verschlusskörper sowie wenigstens ein radialer Durchbruch der Rohrwand des Rohrmündungsendes im Flüssigkeitsbehälter angeordnet sind. Der Durchmesser des zylindrischen Rohrraumes des Rohrstutzens ist behälterseitig unter Bildung einer Ringschulter größer als andernends.

Die US 2004/045632 A1 offenbart einen Beutel mit einer flexiblen Wandung, die eine geschlossene Kammer des Beutels zur Aufbewahrung einer Substanz, beispielsweise einer flüssigen, gasförmigen, pastösen oder pulverförmigen Substanz, begrenzt. An der Innenseite der Wandung ist ein weibliches Element mit einem Körper angebracht, durch den sich eine Bohrung erstreckt, die sich von einer Einführöffnung für ein männliches Element, das von der Wandung des Beutels dicht abgedeckt ist, in der Nähe der Wandung des Beutels bis zu einer Öffnung in der Kammer des Beutels erstreckt. Im Abstand von der Einführöffnung ist die Bohrung ebenfalls durch ein Verschlusselement verschlossen, derart, dass ein männliches Element den die Einführöffnung verdeckenden Teil der Beutelwand von außen durchstechen kann, so dass das männliche Element dann in die Bohrung des weiblichen Elements eindringt und - beim weiteren Einführen des männlichen Elements in die Bohrung - mit dem Verschlusselement zusammenwirkt und den durch das Verschlusselement bewirkten Verschluss der Bohrung aufhebt.

Die US R E32 354 E offenbart einen Verbinder zur Abgabe von Fluiden aus einem Behälter mit einem Fluidspeicherteil und einer Ausgießöffnung, umfassend ein längliches Element mit einem inneren Kanal zum Transportieren des Fluids, das einen Eingang von außen hat, wobei das Element so bemessen ist, dass es eng in die Öffnung passt; und einen in der Öffnung angeordneten Stopfen, der die Öffnung durch eine erste Schnappbefestigung abdichtet, wobei der Stopfen und das Element mittels einer zweiten Schnappbefestigung gegenseitig in Eingriff gebracht werden können, wobei der Stopfen und das Element gegenseitig verschiebbar sind, während sie in Eingriff stehen, um zu ermöglichen, dass sich der Kanaleingang in den Vorratsbereich des Behälters erstreckt, um Fluid abzugeben, wobei die erste Befestigung schwieriger zu lösen ist als die zweite Befestigung, um dies zu bewirken, wodurch sichergestellt wird, dass das Element und der Stopfen gegenseitig in Eingriff stehen, bevor der Stopfen und das Element in den Vorratsbereich geschoben werden und die Abdichtung aufbrechen.

Es ist Aufgabe der Erfindung, das bekannte Anschlussstück zu verbessern.

Die Aufgabe wird durch die Merkmale des unabhängigen Anspruchs gelöst.

Bevorzugte Weiterbildungen sind Gegenstand der abhängigen Ansprüche. Gemäß einem Aspekt der Erfindung, umfasst ein Anschlussstück zum Anschließen eines Schlauches an einen Getränkebeutel ein Einstechrohr mit einer axialen Einstechseite, einer der axialen Einstechseite gegenüberliegenden axialen Rückseite und einer Mantelwand, die in einer von der axialen Rückseite zur axialen Einstechseite gesehenen Einstechrichtung einen Getränkekanal umschließt und die axiale Einstechseite mit der axialen Rückseite verbindet, einen an die axiale Rückseite des Einstechrohr angeschlossenen und in den Getränkekanal führenden Schlauchanschluss, wie einen Schlauchnippel oder ein Anschlussgewinde zum Anschluss des Schlauches, und eine zwischen dem Schlauchanschluss und der axialen Einstechseite angeordnete und radial von der Mantelwand abragende Anschlagwand, die eine Einstechtiefe des Einstechrohrs in den Getränkebeutel begrenzt. Erfindungsgemäß besitzt das Anschlussstück eine in den Getränkekanal führende Ansaugöffnung, die in der Einstechrichtung gesehen am Einstechrohr vor der Anschlagwand angeordnet ist sowie einen sich in der Einstechrichtung gesehen vor der Ansaugöffnung erstreckenden Abstandshalter.

Dem angegebenen Anschlussstück liegt die Überlegung zugrunde, dass sich der Getränkebeutel beim Absaugen des Getränkes über das Anschlussstück zusammenzieht und dabei deformiert. Die Deformierung ist zufällig und kann beim Anschlussstück der eingangs genannten Art dazu führen, dass sich die Wandung des Getränkebeutels auf die Ansaugöffnung legt, diese verschließt und ein weiteres Ansaugen von Getränk aus dem Getränkebeutel verhindert. In der Folge verbleibt ein Getränkerest im Getränkebeutel, der im Ernstfall mit dem Getränkebeutel ungenutzt entsorgt wird. Zumindest wird jedoch der Arbeitsprozess gestoppt, weil der Getränkebeutel zeitaufwändig von der Ansaugöffnung entfernt werden muss.

Hier greift das angegebene Anschlussstück mit dem Gedanken an, die Ansaugöffnung an einer Stelle im Anschlussstück vor einem Abstandshalter anzuordnen, der dafür sorgt, dass sich die Wandung nicht auf die Ansaugöffnung legen kann. Auf diese Weise ist gewährleistet, dass sich der Getränkebeutel stets über das Anschlussstück leer saugen lässt.

In einer Weiterbildung des angegebenen Anschlussstückes ist der Abstandshalter als Teil der Mantelwand ausgebildet. Auf diese Weise lässt sich das angegebene Anschlussstück einstückig beispielsweise als Spritzgussteil nicht nur in einer kostengünstigen Weise aufbauen, auch beim Einstechen des Anschlussstückes in den Getränkebeutel wäre verhindert, dass dieses nicht einfach auseinanderfällt.

Erfindungsgemäß ist die Ansaugöffnung radial durch die Mantelwand geführt. Auf diese Weise ist der kürzeste Weg für die Getränkeflüssigkeit vom Getränkebeutel in den Getränkekanal gewählt, mit entsprechend minimierten Reibungsverlusten.

Erfindungsgemäß ist durch die Mantelwand radial gegenüberliegend zur Ansaugöffnung eine weitere Ansaugöffnung geführt. Auf diese Weise ist die effektive Querschnittsfläche zum Ansaugen der Getränkeflüssigkeit in den Getränkekanal vergrößert, so dass die Getränkeflüssigkeit mit einer entsprechend höheren Strömung angesaugt werden kann und je nach Lagerung die Flüssigkeit mit einer deutlich höheren Wahrscheinlichkeit angesaugt werden kann.

Erfindungsgemäß sind die Ansaugöffnung und die weitere Ansaugöffnungen deckungsgleich. Auf diese Weise lassen sich die beiden Ansaugöffnungen mit einem gemeinsamen Werkzeug in das Anschlussstück einformen.

Erfindungsgemäß ist die Ansaugöffnung als Bohrung durch die Mantelwand ausgebildet. Auf diese Weise lässt sich die Ansaugöffnung auch in ein bereits hergestelltes Anschlussstück noch nachträglich einformen.

Erfindungsgemäß beträgt eine Querschnittsfläche der Ansaugöffnung zwischen 10% und 30% einer Querschnittsfläche des Getränkekanals. Auf diese Weise wird eine größtmögliche Ansaugfläche erreicht, ohne die Mantelwand mechanisch zu destabilisieren.

Erfindungsgemäß beträgt ein Abstand der Ansaugöffnung von der axialen Einstechseite des Einstechrohres zwischen 5% und 20% eines Abstandes der Anschlagwand von der axialen Einstechseite des Einstechrohres. Auf diese Weise ist sichergestellt, dass die Ansaugöffnung nicht von Wandungsteilen des Getränkebeutels verdeckt wird, die beim Einstecken des

Anschlussstückes in den Getränkebeutel mit nach innen gedrückt werden.

Erfindungsgemäß ist das Einstechrohr an der axialen Einstechseite zum Getränkekanal geöffnet. Auf diese Weise lässt sich der Getränkekanal des Anschlussstückes gut reinigen, weil strömungsmechanisch keine Totpunkte im Getränkekanal ausgebildet sind.

In einer noch anderen Weiterbildung des angegebenen Anschlussstückes verjüngt sich die Mantelwand in einem Führungsbereich hinter der axialen Einstechseite in der Einstechrichtung radial, wobei die Ansaugöffnung in der Einstechrichtung gesehen hinter dem Führungsbereich angeordnet ist.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektivische Teilansicht eines Getränkebeutels, an den über ein Anschlussstück ein Schlauch angeschlossen ist,
Fig. 2 das Anschlussstück der Fig. 1 aus einer ersten Perspektive,
Fig. 3 das Anschlussstück der Fig. 1 aus einer zweiten Perspektive,
Fig. 4 das Anschlussstück der Fig. 1 aus einer dritten Perspektive, und
Fig. 5 eine alternative Ausführung für das Anschlussstück der Figs. 2 bis 4.

In den Figuren werden gleiche technische Elemente mit gleichen Bezugszeichen versehen und nur einmal Beschrieben Die Figuren sind rein schematisch und geben vor allem nicht die tatsächlichen geometrischen Verhältnisse wieder.

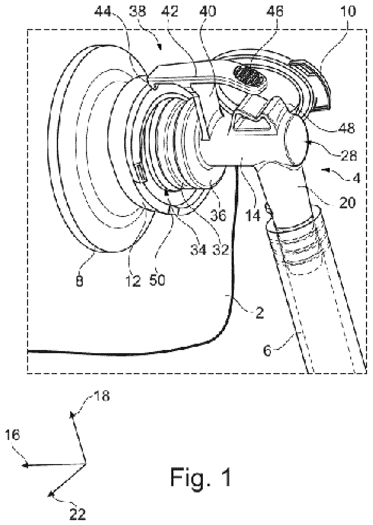

Es wird auf Fig. 1 Bezug genommen, die eine perspektivische Teilansicht eines Getränkebeutels 2 zeigt, an den über ein Anschlussstück 4 ein Schlauch 6 angeschlossen ist.

In dem Getränkebeutel 2 ist ein nicht weiter abgebildetes Getränk gelagert, welches beispielsweise zu Bewirtungszwecken aus dem Getränkebeutel 2 über den Schlauch 6 entnommen und einem Gast serviert werden kann. Vorzugsweise handelt es sich bei dem Getränk um Milch.

Zum Auslassen des Getränkes aus dem Getränkebeutel 2 ist auf seine Wand ein Auslassstutzen 8 aufgesetzt, der einen nicht weiter gezeigten Kanal in ein Inneres des Getränkebeutels 2 öffnet. Auf den Auslassstutzen 8 ist ein mit einem Deckel 10 verschließbares Rohrstück 12 aufgesetzt, mit dem sich ein unbeabsichtigtes Austreten von Getränkeflüssigkeit aus dem Getränkebeutel verhindern lässt. Auf das Rohrstück 12, das beispielsweise nach der technischen Lehre der WO 2010/047814 A2 aufgebaut sein kann, kommt es zum Verständnis der vorliegenden Ausführung nicht an, so dass auf eine genaue Beschreibung der Kürze halber verzichtet wird.

Das Anschlussstück 8 besitzt ein Einstechrohr 14, welches in einer Einstechrichtung 16 durch das Rohrstück 12 und den Auslassstutzen 8 hindurch in Innere des Getränkebeutels 2 gestochen ist. Am in der Einstechrichtung 16 gesehenen hinteren Ende des Einstechrohres ragt entgegen einer Höhenrichtung 18, die sich rechtwinklig zur Einstechrichtung 16 erstreckt, vom Einstechrohr 14 ein Schlauchanschluss in Form eines Schlauchnippels 20 ab, auf den der Schlauch 6 aufgesteckt ist. Die Richtung, die sich rechtwinklig zur Einstechrichtung 16 und zur Höhenrichtung 18 erstreckt, soll nachstehend als Querrichtung 22 bezeichnet werden.

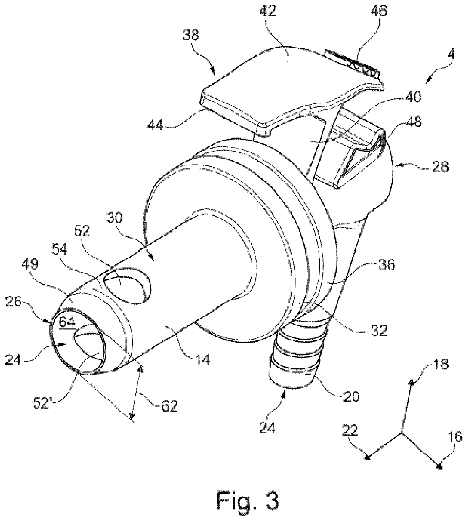

Durch das Einstechrohr 14 und den Schlauchnippel 20 ist ein erst in Fig. 3 zu sehender Getränkekanal 24 geführt, durch den sich das Getränk aus dem Getränkebeutel 2 über das Anschlussstück 4 in den Schlauch 6 führen lässt.

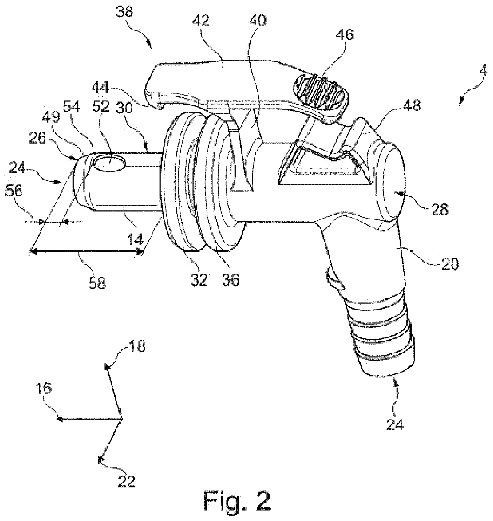

Für weitere Details des Anschlussstückes wird zusätzlich auf Fig. 2 Bezug genommen, die das Anschlussstück der Fig. 1 aus einer ersten Perspektive zeigt.

Das Einstechrohr 14 weist in der Einstechrichtung 16 gesehen am vorderen Ende eine axialen Einstechseite 26 auf, der in der Einstechrichtung 16 gesehen eine axiale Rückseite 28 gegenüberliegt. Die axiale Einstechseite 26 und die axiale Rückseite 28 sind über eine Mantelwand 30 miteinander verbunden, die den Getränkekanal 24 im Bereich des Einstechrohres 14 umschließt. Am in der Einstechrichtung 16 gesehenen rückwärtigen Ende des Einstechrohres 14 mündet der Getränkekanal 24 in den Schlauchnippel 20.

Zwischen dem Schlauchnippel 20 und der axialen Einstechseite 26 des Einstechrohres 14 ist eine radial von der Mantelwand 30 abragende Anschlagwand 32 angeordnet. Die Anschlagwand 32 soll beim Einstechen des Anschlussstücks 4 in den Getränkebeutel 2 in der Einstechrichtung 16 eine Einstechtiefe während dieses Einstechvorganges begrenzen. Hierzu ist in dem Rohrstück 12 eine Aufnahmekammer 34 ausgebildet, in die die Anschlagwand 32 bei dem zuvor genannten Einstechvorgang eingesetzt wird. In der Aufnahmekammer 34 ist eine in den Figuren nicht weiter zu sehende Anschlagschulter ausgebildet, an die die Anschlagwand 32 bei dem zuvor genannten Einstechvorgang axial anschlägt, so dass ein tieferes Einstechen des Anschlussstückes 4 in der Einstechrichtung 16 in den Getränkebeutel 2 hinein verhindert wird.

In der Einstechrichtung 16 gesehen hinter der Anschlagwand 32 ist parallel dazu eine Bewegungsbegrenzungswand 36 angeordnet, die eine Schwenkbewegung eines Fixierelementes 38 einschränken soll. Das Fixierelement 38 besitzt eine Tragwand 40, die sich in Einstechrichtung 16 gesehen hinter der Bewegungsbegrenzungswand 36 in der Höhenrichtung 18 über die Einstechrichtung 16 hinaus erstreckt. Auf das in der Höhenrichtung 18 gesehene obere Ende der Tragwand 40 ist eine sich in der Einstechrichtung 16 erstreckende Steuerwand 42 aufgesetzt, mit der sich die Funktion des Fixierelementes 38 steuern lässt. Vom in der Einstechrichtung 16 gesehenen vorderen Ende der Steuerwand 42 ragt entgegen der Höhenrichtung 18 ein Haken 44 ab. An der in der Einstechrichtung 16 gesehenen hinteren Ende der Steuerwand 42 ist ein Griffelement 46 ausgebildet. Die Steuerwand 42 liegt auf der Bewegungsbegrenzungswand 40 im Wesentlichen mittig zwischen dem Haken 44 und dem Griffelement 46 auf. In der Höhenrichtung 18 gesehen unterhalb des Griffelementes 46 ist ein in und entgegen der Höhenrichtung 18 federndes Federelement 48 angeordnet.

Am Rohrstück 12 ist in der Einstechrichtung 16 gesehen am hinteren Ende ein Flansch 50 ausgebildet, mit dem der Haken 44 entgegen der Einstechrichtung 16 formschlüssig verbindbar ist.

Um das Einstechen des Einstechrohres 14 in den Getränkebeutel 2 zu erleichtern, ist an der axialen Einstechseite 26 ein sich radial verjüngender Bereich 49 ausgebildet. Durch diesen verjüngenden Bereich 49 wird das Anschlussstück 4 beim Einstechen in den Getränkebeutel 2 geführt, so dass der verjüngende Bereich 49 auch als Führungsbereich bezeichnet werden kann.

Im Betrieb wird das Anschlussstück 4 mit der axialen Einstechseite 26 voran in der Einstechrichtung 16 durch das Rohrstück 12 und den Auslassstutzen 8 geführt, bis die Anschlagwand 32 an der Anschlagschulter in der Aufnahmekammer 34 anschlägt. In der Fig. 1 ist das Anschlussstück 4 in einem Zustand dargestellt, in dem die Anschlagwand 32 noch nicht in die Aufnahmekammer 34 eingeführt ist, um diese zu visualisieren. Beim Einführen der Anschlagwand 32 in die Aufnahmekammer 34 wird der Haken 44 in der Höhenrichtung 18 gesehen über den Flansch 50 gehoben und verhakt sich mit dem Flansch 50, wenn die Anschlagwand 32 an der Anschlagschulter in der Aufnahmekammer 34 anliegt. In diesem Zustand ist das Anschlussstück 4 gegen ein unbeabsichtigtes Herausziehen aus dem Getränkebeutel 2 geschützt, so dass das Getränk sicher aus dem Getränkebeutel 2 durch den Getränkekanal 24 in den Schlauch 6 gelangen kann.

Ist der Getränkebeutel 2 entleert, wird die Steuerwand 42 am Griffelement 46 gegen das Federelement 48 gedrückt. Die Federwand 48 dient dabei als Bewegungsbegrenzungsmittel, um eine Überspannung des Fixierelementes 38 zu vermeiden. Ist das Griffelement 46 gegen das Federelement 48 gedrückt, befindet sich der Haken 44 in der Höhenrichtung 18 gesehen über dem Flansch 50, so dass das Anschlussstück 38 aus dem Getränkebeutel 2 wieder herausgezogen werden kann. Um ein Schwingen des Fixierelementes 38 beispielsweise bei einem abrupten Loslassen des Griffelementes 46 zu vermeiden, beschränkt die Bewegungsbegrenzungswand 36 eine Schwingbewegung der Tragwand 40.

Auf die zuvor genannte Weise kann der mit Getränk gefüllte Getränkebeutel 2 an den Schlauch 6 angeschlossen und nach dem Entleeren wieder vom Schlauch 6 getrennt werden. Da allerdings die Wandung des Getränkebeutels 2 flexibel ist, könnte es passieren, dass sich beim Absaugen des Getränkes aus dem Getränkebeutel die Wandung des Getränkebeutels 2 auf die axiale Einstechseite 26 legt und so den Getränkekanal 24 verschießt. In der Folge wäre eine weitere Entnahme nur möglich, wenn der Getränkekanal 24 wieder von Wandung des Getränkebeutels 2 befreit wird. Dies kann je nach der örtlichen Gegebenheit, in der der Getränkebeutel 2 eingesetzt wird unterschiedlich aufwändig sein.

Es lässt sich nicht vermeiden, dass sich der Getränkebeutel 2 auf die axiale Einstechseite 26 des Einstechrohres 14 legt. Aus diesem Grund wird mit der vorliegenden Ausführung vorgeschlagen, durch das Einstechrohr 14 eine in den Getränkekanal 24 führende Ansaugöffnung 52 auszubilden, die in der Einstechrichtung 16 gesehen am Einstechrohr 14 vor der Anschlagwand 32 angeordnet ist. Diese Ansaugöffnung 52 ist mit einem Abstandshalter 54 in einem Abstand 56 in der Einstechrichtung 16 gesehen hinter der axialen Einstechseite 26 angeordnet.

Die Ansaugöffnung 52 gewährleistet, dass wenn sich die Wandung des Getränkebeutels 2 auf die axiale Einstechseite 26 des Einstechrohres 14 legt, eine Hilfsöffnung verbleibt, über die immer noch Getränk aus dem Getränkebeutel 2 in den Schlauch 6 geleitet werden kann.

In der vorliegenden Ausführung ist der Abstandshalter 54 als Teil der Mantelwand 30 ausgebildet. Dies ist allerdings nur eine bevorzugte Ausführung. Alternativ kann der Abstandshalter auch als getrenntes Teil vom Anschlussstück bereitgestellt werden. Hierzu könnte beispielsweise über den Abstandshalter ein Sieb auf die axiale Einstechseite 26 des Einstechrohres 14 aufgesetzt werden, wobei das Sieb dann die einzelnen Öffnungen gemäß dem oben genannten Gedanken besitzt.

Ferner ist die Ansaugöffnung 52 radial durch die Mantelwand geführt. Hierbei sollte die Winkellage der Ansaugöffnung so gewählt sein, dass sich das Anschlussstück 4 in einfacher Weise urformen, wie zum Beispiel Spritzgießen lässt. Um die in Fig. 2 gezeigte Ausführung zu realisieren wäre mindestens ein Schieber notwendig, der beim Spritzgießen in die Ansaugöffnung 52 eingeführt ist. Auf einen solchen Schieber könnte verzichtet werden, wenn die Ansaugöffnung um 90° versetzt an der Mantelwand 30 ausgebildet ist.

In der vorliegenden Ausführung beträgt der oben genannte Abstand 56 der Ansaugöffnung 52 in der Einstechrichtung 16 gesehen hinter der axialen Einstechseite 26 zwischen 5% und 20% einer Einstechtiefe 58 des Anschlussstückes 4 in den Getränkebeutel, die einem Abstand der Anschlagwand 32 von der axialen Einstechseite 26 des Einstechrohres 14 entspricht. Mit dem Abstand 56 ist gewährleistet, dass die Ansaugöffnung 52 nicht von der Wandung des Getränkebeutels 2 verdeckt wird und dadurch wirkungslos bleibt.

Dabei ist der genannte Abstand 56 der Ansaugöffnung 52 in der Einstechrichtung 16 gesehen hinter der axialen Einstechseite 26 mindestens so groß, wie eine Breite des verjüngenden Bereiches 49 in der Einstechrichtung 16.

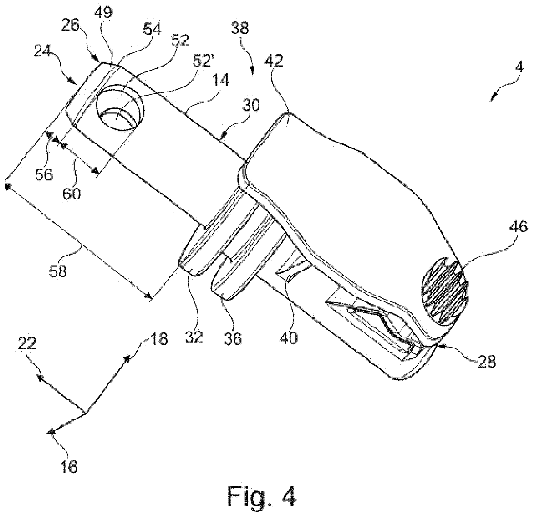

Weitere Einzelheiten des Anschlussstückes 4 der Fig. 1 werden anhand der Fig. 3 und 4 erläutert, die das Anschlussstück 3 entsprechend aus einer zweiten und dritten Perspektive zeigen.

Neben der bereits gezeigten Ansaugöffnung 52 kann durch die Mantelwand 30 eine weitere Ansaugöffnung 52' geführt sein. Die weitere Ansaugöffnung 52' weist eine sich von der Ansaugöffnung 52 unterscheidende Winkellage auf und erhöht so einerseits den wirksamen Querschnitt, über den Getränk aus dem Getränkebeutel 2 in den Getränkekanal 24 angesaugt wird. Andererseits erhöht die weitere Ansaugöffnung 52' auch die Ausfallsicherheit, denn wenn sich die Wandung des Getränkebeutels 2 beim Absaugen der Getränkeflüssigkeit auch über die Ansaugöffnung 52 legt, so steht zusätzlich auch die weitere Ansaugöffnung 52' zur Verfügung.

Dabei ist die Winkellage der weiteren Ansaugöffnung 52' vorzugsweise so gewählt, dass sie der Ansaugöffnung 52 radial gegenüberliegt. Zweckmäßigerweise sind die Ansaugöffnung 52 und die weitere Ansaugöffnung 52' deckungsgleich ausgeführt, so dass sich die beiden Ansaugöffnungen 52, 52' mit einem gleichen Werkzeug, wie beispielsweise einem Bohrer, Schieber oder dergleichen ausbilden lassen.

Werden die Ansaugöffnung 52 und die weitere Ansaugöffnung 52' nachträglich in das Anschlussstück eingeformt, können sie als Bohrung durch die Mantelwand 30 ausgebildet werden.

Insbesondere im Falle der vorliegenden Ausführung sollte eine Querschnittsfläche der Ansaugöffnung 52, die in Fig. 4 durch ihren Durchmesser 60 angedeutet ist, so gewählt werden, dass die Stabilität des Anschlusstückes 4 in diesem Bereich für den oben beschriebenen Einstechvorgang ausreichend hoch ist. Hierzu haben sich Querschnittsflächen zwischen 10% und 30% einer Querschnittsfläche des Getränkekanals 24 als geeignet erwiesen, die in Fig. 3 durch ihren Durchmesser 62 angedeutet ist.

Die in Fig. 3 angedeutete Axialöffnung 64 zum Getränkekanal 14 des Einstechrohres 14 an der axialen Einstechseite 24 ist grundsätzlich nicht notwendig, wenn beispielsweise die beiden Ansaugöffnungen 52, 52' ausgebildet sind. Gedanke hinter dem Anschlussstück 4 ist, zwei unabhängige Öffnungen vorzusehen, so dass sich über eine der Öffnungen Getränkeflüssigkeit aus dem Getränkebeutel 2 absaugen lässt, wenn sich die Wandung des Getränkebeutels 2 auf die andere der Öffnungen legt.

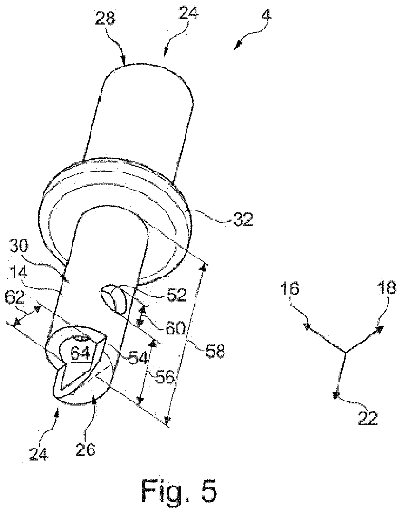

In Fig. 5 ist eine alternative Ausführung für das Anschlussstück 4 gezeigt.

Es besitzt kein Fixierelement 38, so dass auch auf eine entsprechende Bewegungsbegrenzungswand 36 und ein Federelement 48 verzichtet wurde. Allerdings lässt sich das alternative Anschlussstück 4 problemlos um diese Elemente erweitern.

Statt des Schlauchnippels 20 als Schlauchanschluss besitzt das alternative Abschlussstück 4 ein Anschlussgewinde, welches als Innengewinde entgegen der Einstechrichtung 22 von der axialen Rückseite 28 her in das Einstechrohr 14 eingeformt ist. Dieses Anschlussgewinde ist aus der Perspektive der Fig. 5 nicht zu sehen.

Schließlich ist in der alternativen Ausführung die Axialöffnung 64 zum Getränkekanal 24 teilweise vom Abstandshalter 54 überdeckt, so dass auch die Axialöffnung 64 gegen das ein Abdecken durch die Wandung des Getränkebeutels 2 geschützt ist. Die Wandung sollte die Axialöffnung 64 aus einer Richtung überdecken, die von einer Richtung der Ansaugöffnungen 52, 52' verschieden ist.

Die in Fig. 5 gezeigte Überdeckung der Axialöffnung 64 lässt sich auch im Anschlussstück 4 der Fig. 2 bis 4 verwirklichen.

## Patentansprüche

1. Anschlussstück (4) zum Anschließen eines Schlauches (6) an einen Getränkebeutel (2), umfassend:
- ein Einstechrohr (14) mit einer axialen Einstechseite (26), einer der axialen Einstechseite (26) gegenüberliegenden axialen Rückseite (28) und einer Mantelwand (30), die in einer von der axialen Rückseite (28) zur axialen Einstechseite (26) gesehenen Einstechrichtung (22) einen Getränkekanal (24) umschließt und die axiale Einstechseite (26) mit der axialen Rückseite (28) verbindet,
- einen an die axiale Rückseite (28) des Einstechrohrs (14) angeschlossenen und in den Getränkekanal (24) führenden Schlauchnippel (20) zum Anschluss des Schlauches (6),
- eine zwischen dem Schlauchnippel (20) und der axialen Einstechseite (26) angeordnete und radial von der Mantelwand (30) abragende Anschlagwand (32), die eine Einstechtiefe (58) des Einstechrohrs (14) in den Getränkebeutel (2) begrenzt, und
- eine in den Getränkekanal (24) führende Ansaugöffnung (52), die in der Einstechrichtung (22) gesehen am Einstechrohr (14) vor der Anschlagwand (32) angeordnet ist, und
- einen sich in der Einstechrichtung (22) gesehen vor der Ansaugöffnung (52) erstreckenden Abstandshalter (54),
- wobei das Einstechrohr (14) an der axialen Einstechseite (26) zum Getränkekanal (24) geöffnet (64) ist, wobei
- eine Querschnittsfläche (60) der Ansaugöffnung (52) zwischen 10% und 30% einer Querschnittsfläche (62) des Getränkekanals (2) beträgt, und
- ein Abstand (56) der Ansaugsöffnung (52) von der axialen Einstechseite (26) des Einstechrohres (14) zwischen 5% und 20% eines Abstandes (58) der Anschlagwand (32) von der axialen Einstechseite (26) des Einstechrohres (14) beträgt,
- die Ansaugöffnung (52) und eine weitere, der Ansaugöffnung (52) radial gegenüberliegende deckungsgleiche Ansaugöffnung (52') durch die Mantelwand (30) geführt sind,
- die Ansaugöffnungen (52, 52') als Bohrungungen durch die Mantelwand (30) ausgebildet sind.

2. Anschlussstück (4) nach Anspruch 1, wobei der Abstandshalter (54) als Teil der Mantelwand (30) ausgebildet ist.

3. Anschlussstück (4) nach einem der vorstehenden Ansprüche, wobei sich die Mantelwand (30) in der Einstechrichtung (22) gesehen in einem Führungsbereich (49) hinter der axialen Einstechseite (26) radial verjüngt und die Ansaugöffnung (52) in der Einstechrichtung (22) gesehen hinter dem Führungsbereich (49) angeordnet ist.

## Claims

1. Connecting piece (4) for connecting a hose (6) to a beverage bag (2), comprising:
- a piercing tube (14) having an axial piercing side (26), an axial rear side (28) opposite the axial piercing side (26) and a jacket wall (30) which encloses a beverage channel (24) in a piercing direction (22) viewed from the axial rear side (28) to the axial piercing side (26) and connects the axial piercing side (26) to the axial rear side (28),
- a hose nipple (20) connected to the axial rear side (28) of the piercing tube (14) and leading into the beverage channel (24) for connecting the hose (6),
- a stop wall (32) arranged between the hose nipple (20) and the axial insertion side (26) and projecting radially from the jacket wall (30), which limits an insertion depth (58) of the insertion tube (14) into the beverage bag (2), and
- a suction opening (52) which leads into the beverage channel (24) and is arranged on the piercing tube (14) in front of the stop wall (32) as seen in the piercing direction (22), and
- a spacer (54) extending in front of the suction opening (52) as seen in the piercing direction (22),
- wherein the piercing tube (14) is open (64) at the axial piercing side (26) towards the beverage channel (24),
wherein
- a cross-sectional area (60) of the suction opening (52) is between 10% and 30% of a cross-sectional area (62) of the beverage channel (2), and
- a distance (56) of the suction opening (52) from the axial piercing side (26) of the piercing tube (14) is between 5% and 20% of a distance (58) of the stop wall (32) from the axial piercing side (26) of the piercing tube (14),
- the suction opening (52) and a further congruent suction opening (52') radially opposite the suction opening (52) are guided through the casing wall (30),
- the suction openings (52, 52') are formed as bores through the casing wall (30).

2. Connecting piece (4) according to claim 1, wherein the spacer (54) is formed as part of the jacket wall (30).

3. Connecting piece (4) according to one of the preceding claims, wherein the jacket wall (30) tapers radially in a guide region (49) behind the axial insertion side (26), as seen in the insertion direction (22), and the suction opening (52) is arranged behind the guide region (49), as seen in the insertion direction (22).

## Revendications

1. Pièce de raccordement (4) pour raccorder un tuyau (6) à un sac à boisson (2), comprenant :
- un tube de perçage (14) avec un côté de perçage axial (26), un côté arrière axial (28) opposé au côté de perçage axial (26) et une paroi d'enveloppe (30) qui entoure un canal de boisson (24) dans une direction de perçage (22) vue depuis le côté arrière axial (28) vers le côté de perçage axial (26) et qui relie le côté de perçage axial (26) au côté arrière axial (28),
- un raccord de tuyau (20) raccordé à la face arrière axiale (28) du tube de perçage (14) et menant dans le canal de boisson (24) pour le raccordement du tuyau (6),
- une paroi de butée (32) disposée entre le raccord de tuyau (20) et le côté axial de pénétration (26) et dépassant radialement de la paroi d'enveloppe (30), qui limite une profondeur de pénétration (58) du tube de pénétration (14) dans le sachet de boisson (2), et
- une ouverture d'aspiration (52) menant dans le canal de boisson (24), qui, vue dans la direction de pénétration (22), est disposée sur le tube de pénétration (14) avant la paroi de butée (32), et
- une entretoise (54) s'étendant devant l'ouverture d'aspiration (52), vue dans la direction de piquage (22),
- le tube de piquage (14) étant ouvert (64) sur le côté axial de piquage (26) vers le canal de boisson (24),
où
- une surface de section transversale (60) de l'ouverture d'aspiration (52) est comprise entre 10% et 30% d'une surface de section transversale (62) du canal de boisson (2), et
- une distance (56) de l'ouverture d'aspiration (52) par rapport au côté de perçage axial (26) du tube de perçage (14) est comprise entre 5% et 20% d'une distance (58) de la paroi de butée (32) par rapport au côté de perçage axial (26) du tube de perçage (14),
- l'ouverture d'aspiration (52) et une autre ouverture d'aspiration (52') coïncidente, opposée radialement à l'ouverture d'aspiration (52), sont guidées à travers la paroi d'enveloppe (30),
- les ouvertures d'aspiration (52, 52') sont réalisées sous forme de perçages à travers la paroi d'enveloppe (30).

2. Pièce de raccordement (4) selon la revendication 1, dans laquelle l'entretoise (54) est conçue comme une partie de la paroi d'enveloppe (30).

3. Pièce de raccordement (4) selon l'une des revendications précédentes, dans laquelle la paroi d'enveloppe (30), vue dans la direction d'insertion (22), se rétrécit radialement dans une zone de guidage (49) derrière le côté axial d'insertion (26) et l'ouverture d'aspiration (52), vue dans la direction d'insertion (22), est disposée derrière la zone de guidage (49).
